Europäisches Patentamt

European Patent Office

Office européen des brevets

(19)

(11) Publication number: **0 173 893 B1**

# EUROPEAN PATENT SPECIFICATION

(45) Date of publication of patent specification: **31.07.91**   (51) Int. Cl.⁵: **G06F 12/08**

(21) Application number: **85110141.0**

(22) Date of filing: **13.08.85**

(54) Computing system and method providing working set prefetch for level two caches.

(30) Priority: **24.08.84 US 643931**

(43) Date of publication of application:
**12.03.86 Bulletin 86/11**

(45) Publication of the grant of the patent:
**31.07.91 Bulletin 91/31**

(84) Designated Contracting States:
**DE FR GB**

(56) References cited:

IBM TECHNICAL DISCLOSURE BULLETIN, vol. 26, no. 1, June 1983, pages 52-54, New York, US; K. SO: "Simple prefetching scheme for memory hierarchy"

IBM TECHNICAL DISCLOSURE BULLETIN, vol. 25, no. 1, June 1982, page 88, New York, US; B.T. BENNETT et al.: "Prefetching in a multilevel memory hierarchy"

IBM TECHNICAL DISCLOSURE BULLETIN, vol. 25, no. 11B, April 1983, pages 5978-5980, New York, US; R.N. RECHTSCHAFFEN: "Cache miss history table"

IBM TECHNICAL DISCLOSURE BULLETIN, vol.

18, no. 7, December 1975, pages 2348-2350, New York, US; P.A. FRANASZEK: "Adaptive transfer unit size variation"

IBM TECHNICAL DISCLOSURE BULLETIN, vol. 26, no. 10B, March 1984, pages 5512-5513, New York, US; F.A. GIRAUD et al.: "Management of traffic in memory hierarchy"

(73) Proprietor: **International Business Machines Corporation**
**Old Orchard Road**
**Armonk, N.Y. 10504(US)**

(72) Inventor: **Rosenfeld, Philip Lewis**
**100 Round Hill Drive**
**Briarcliff Manor New York 10510(US)**
Inventor: **So, Kimming**
**44 Sarles Lane**
**Pleasantville New York 10570(US)**

(74) Representative: **Burt, Roger James, Dr.**
**IBM United Kingdom Limited Intellectual Property Department Hursley Park Winchester Hampshire SO21 2JN(GB)**

**Description**

The present invention relates to the improvement of the memory access time and memory access traffic in high performance processors with multiple levels of memory hierarchy.

Each processor in a high performance multi-processor computer system either shares with other processors, or owns privately, a multiple level memory hierarchy including a high speed but low capacity buffer, called a cache, and a low speed, but high capacity, main memory. Although the cache only contains a small portion of the data the processor recently used, it has a very high hit ratio that results in the average memory access time of the processor being significantly reduced. However, the performance of a cache is still limited by its size. If the main memory is far away, even if the processor misses its data in the cache only a few time, it has to wait for a long time until they are fetched from the main memory before it can resume its execution. One of the ideas to compensate for the misses is to have another level of cache implemented between the cache and the main memory. F. Sparacio, in the IBM Technical disclosure Bulletin, Vol. 21, Ho. 6, November 1978, sets forth a second level cache. If the cache that is closest to the processor is called a level One (L1) cache, then the cache that is between L1 cache and the main memory is called a level Two (L2) cache.

A L2 cache is slower than a L1 cache but has a larger storage capacity. Therefore, if the storage units of L1 and L2 caches are called respectively a line and a block, a block must be many times larger than a line in order to minimise the directory space of a L2 cache and to take advantage of the fact that the processor is very often accessing the memory locations sequentially. In a Full-Block L2 cache, when a memory access from the processor misses the L2 cache, (i.e., the block that contains the accessed data is not resident in L2 cache) a block must be transferred from the main memory to the L2 cache. However, when two or more misses to the L2 cache occur in close succession of memory accesses, the processor experiences a long delay. This kind of trailing edge effect is due to the large block size chosen for an L2 cache.

One way to minimise the delay caused by this effect without increasing the directory space is to use a Sectored Cache approach, an idea used in the cache of IBM System/360 Model 85 Machine. According to this idea, the allocation of storage in the L2 cache is still on a block basis, but only the portion of the block, usually the L1 line which is causing the miss, is fetched from the memory and loaded into the L2 cache. Compared to the performance of a L1 cache, a sectored cache certainly still holds a large working set of the programs being executed on the processor. However, when the processor switches to a new program and hence a new working set, both caches cause the same amount of misses. Because the sectored L2 cache is fetching the same amount of data as a L1 cache on a cache miss, it could have loaded a new working set faster had it not always been restricted to fetch only one or two lines per miss.

Compared to a L1 cache implemented in front of the main memory as before, a L2 cache has no significant difference in structure, in the way it is operated, and the interaction with the main memory. Any idea used for L1 caches may also be applied to L2 caches. There are many ways of loading the data from the memory to a L1 cache. U. S. Patent 3,588,829 to Boland et al sets forth a memory hierarchy of a cache and a main memory. Using the buses between the cache and the main memory as buffers and interleaved memory, the memory hierarchy allows multiple fetches or stores to occur in parallel. U. S. Patent 4,317,168 to Messina et al sets forth a cache organisation arranged so that line fetches from the memory and replacement of changed lines from the cache can occur in parallel. Both references concentrate on the concurrency of accesses to the memory hierarchy. On the other hand, all of the afore-mentioned loading schemes proposed are on a demand basis, in a sense that a line is loaded to the cache only if it caused a miss. U. S. Patents 3,735,360 and 3,771,137 set forth a Store-in cache for which any line can be loaded to the cache on a miss and any change made to a line is kept in the cache until the line is replaced from the cache.

U. S. Patent 4,442,487 sets forth a three level memory hierarchy in a multiprocessor system such that each processor has, in addition to a private L1 cache and a private L2 cache, a shared cache at each level. The emphasis is on the effectiveness of sharing of data among the processors in a multi-processor system.

What the present invention provides is, a computing system including a processor operative with a three level memory hierarchy comprised of a first level cache , a second level cache and a main memory , with the main memory storing a plurality of sets of information, with each set of information comprised of subsets of information, with the second level cache storing subsets of information, and including usage tables, characterised in that a usage table is operative with the main memory and the second level cache, in which is stored usage information relative to the subset usage of each set of information presently or previously resident in the second level cache, such that when a given set of information is returned main memory from the second level cache, and a given subset thereof is subsequently requested for transfer back to the second level cache, that subset together with only the subsets of the given set which were utilised, during the given set's last residency or last partial residency in the second level cache, are transferred back to the second level cache from the main memory.

The sets and subsets of information can be said to be comprised of blocks and lines of information, respectively, and the unit of data requestable by the processor is a double word, a request for a double word, the line containing which is not resident in the first level cache, causes that line to be requested from the second level cache and an entry to be made relative thereto, in the usage table, so that the usage table compiles a history of the line traffic between the two caches but organised in terms of the block organisation of main memory.

The line capacity of the usage table can be expected to be finite but greater than the line capacity of the L2 cache, both caches and the usage table being maintained on a least-recently used, cast-out basis.

The present invention also provides a method of operating a computer system comprised of at least a processor and a three level memory hierarchy, including a main memory at memory level three in which sets of information are stored at addressable locations, with each set of information being comprised of subsets of information, an L2 cache at memory level two n which a given number of sets of information previously transferred from the main memory are stored, a table operative with the main memory and the second level cache, in which is stored usage information relative to the subset usage of each set of information presently or previously resident in the second level cache, and an L1 cache at memory level one in which a given number of subsets of information previously transferred from the L2 cache are stored, the method characterised by the steps of:

interrogating by the processor, to access a given subset of information, the L1 cache, and if the subset is stored therein, accessing same, and if not;

interrogating by the processor, to access the given subset of information, the L2 cache, and if the subset is stored therein, transferring same to the L1 cache, and if not;

interrogating by the processor, to access the given subset of information, the main memory, with the given subset of information, including any other subsets in the same set of information that had previously utilised in a previous residency in the L2 cache, being transferred to the L2 cache; and

transferring the given subset of information to the L1 cache from the L2 cache for access by the processor.

None of the prior art patents teach loading multiple lines into a cache to help the processor build its working set, while at the same time being concerned about the traffic between the cache and the main memory, while the present invention addresses just this problem and is based on a sectored L2 cache. On a block miss at the L2 cache, a line in the block is fetched according to its prior use during the last residency of the block in the L2 cache. Since programs running on a processor tend to repeatedly use the same set of locations in a memory segment from time to time, the theory of this arrangement is that it provides a way to guess accurately, on a block miss, exactly which subset of lines in the block will soon be used by the processor. This form of L2 cache can be said to be more intelligent in the sense that it remembers the usage of lines in each block so that memory traffic is greatly reduced because not all the lines in the block are brought in. On the other hand, it helps the processor to recreate the working set as soon as a block is reactivated. Thus, the memory access time is significantly reduced.

Put another way, the arrangement provides an intelligent way for a processor to fetch data from its main memory to the L2 cache. The idea is to keep a record of which lines in a block were previously used. When a block is returned to the main memory and is subsequently missed, only the lines which were used in the last residency in the L2 cache, are then transferred to the L2 cache. One of the realisations of the idea is an implementation of a Working Set History Table (WSHT) next to a sectored L2 cache. The organisation and operations of the sectored L2 cache are the same as normal, except for the interface with the WSHT. The structure of a WSHT is similar to the directory of the sectored cache but larger. The WSHT contains a set of block identifiers (ID) recently used by the processor and a use bit per line in a block. Since the WSHT is a finite table, replacement of block usage is necessary, and is on a Least-Recently-Used (LRU) basis. An access to the L2 cache is sent in parallel to the WSHT to update the line usage in the accessed block. On a block miss in the L2 cache, if the block ID, and hence its working set history, is also found in the WSHT, any line in the block with the use bit on is loaded from the memory to the L2 cache. Otherwise, the block ID is stored in the WSHT and only the line causing the block miss is loaded into the L2 cache.

The present invention will be described further by way of example with reference to an embodiment of the invention as illustrated in the accompanying drawings in which:-

FIG. 1 is a diagram of a computer system with three levels of memory hierarchy;

FIG. 2 is a diagram of three levels of memory hierarchy with a Working Set History Table (WSHT) next to the L2 cache;

FIG. 3 is a diagram of an L2 cache addressing scheme with a 24-bit memory address and assumed cache structures;

FIG. 4 is a diagram of an WSHT addressing scheme with a 24-bit memory address and assumed table structures;

FIG. 5 is a diagram of an entry in the L2 cache directory;

FIG. 6 is a diagram of an entry in the WSHT directory;

FIG. 7 is a block diagram of an L2 cache with an interface to the WSHT;

FIG. 8 is a block diagram of an WSHT and an interface to the directory of the L2 cache;

FIG. 9 is a diagram of the line validity update logic in an L2 cache; and

FIG. 10 is a diagram of the line usage update logic in the WSHT.

The described data processing system includes a processor 100, and its associated three levels of memory hierarchy, namely, a level One (L1) cache 200 and its directory 250, a Level Two (L2) cache 300 and its directory 350, and main memory 500. The memories are connected to each other and to the processor through a single (or multiple address) bus structure 110 for transfer of addresses of memory requests, and connected through data bus structure 120 for transfer of changed or requested data. In general, any memory request, either a store or fetch, is first sent through the address bus 110 to the L1 cache, then secondly to the L2 cache, and then thirdly to the main memory. A search through the memory hierarchy terminates at the level where the requested data is found. Before describing the system operation, certain terms used are set forth below. The size of a memory request, which refers to a fixed number of bytes in the memory, is fixed and is called an access unit. Although the invention does not require a specific access unit, for convenience, it is assumed that, in the described embodiment, all the memory accesses are on a double-word (DW) basis. The storage unit of the L1 cache is called a Line which can hold a consecutive section of data in the memory. The L1 cache directory holds an entry for each line presently in the L1 cache. It also maintains a replacement order of the lines in the cache such that, when the cache is full and a line is moving in, the least-recently-used line is to be replaced. The storage unit of the L2 cache is called a block which is assumed to be many times bigger than a line in L1 cache. The line and block containing the current DW memory access are respectively called the accessed line and the accessed block. A Full Block L2 cache, which moves whole blocks of data in and out of the cache on a cache miss, is the same as the L1 cache in both structure and operation. A Sectored L2 cache is slightly different. Although the allocation of cache storage and replacement of data are still on a block basis, the loading of data is only on a line basis. If the accessed block is currently not in the L2 cache, only one or a few lines, but not all of the lines, in the block are loaded into the L2 cache. This is called a block miss. When there is a block miss, or when the accessed block is found in the L2 cache but the line containing the memory request is not, the current memory request generates a line miss.

There are two ways of maintaining the consistency of copies of data in both a cache and its next level of storage. In a Store-in cache, the latest copy of a changed line is only kept in the cache until the whole line is displaced from the cache to return to the next level. In a Store-through cache, both the cache and its next level keep, from time to time, the latest copies of all data changed by the processor. This requires any data store to update both the cache and the next level, but if the data is found in a store-in cache there is no need to update the next level. Again for convenience, assume a store-through L1 cache and a store-in L2 cache are used in the described embodiment. Detailed descriptions of store-in caches and the replacement logic are described in U. S. Patents 3,735,360 and 3,771,137. A detailed description of a store-through cache is set forth in an article by C. J. Conti entitled, "Concepts for Buffer Storage", published in the IEEE Computer Group News, March 1969, Page 9-13. The structure and operation of a sectored cache is described in J. S. Liptay's article in the IBM System Journal Vol. 7 #1, 1968, Page 15-21. Therefore, they are not described in detail herein.

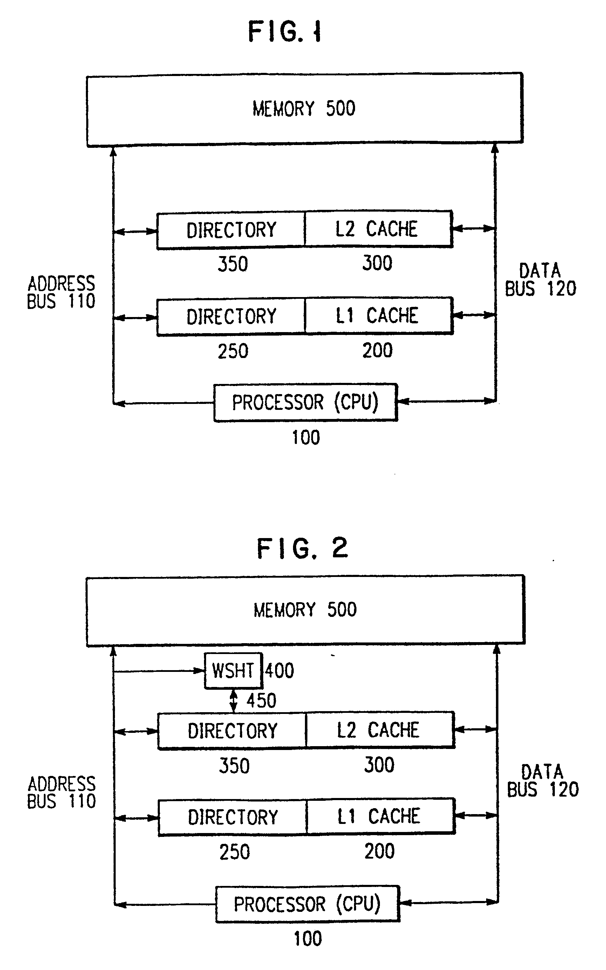

Referring now to FIG. 2, a working Set History Table (WSHT) 400 is implemented next to the L2 cache of the computer system of FIG. 1. The WSHT contains no data storage, but rather a table of all the identifiers (IDs) of recently used blocks with their line usage, as will be described hereinafter. Essentially, the WSHT is similar to an L2 cache directory, except for the interface 450 to the L2 cache directory. For any memory access of the L2 cache, the same access address is also sent to the WSHT. If the ID of the accessed block is found in the WSHT, the use bit of the accessed line in the block is updated. Otherwise, the least-recently-used block ID is replaced by the currently accessed block ID and the use bit for the accessed line in the block is turned on. When the L2 cache detects a block miss, it signals the WSHT, via interface 450, to see if the block ID is in the table. If the block ID is found in the WSHT, all the lines with use bits on are fetched to the L2 cache, except for the line causing the miss, for which the fetch request has already been sent out earlier through the normal operation of the sectored L2 cache.

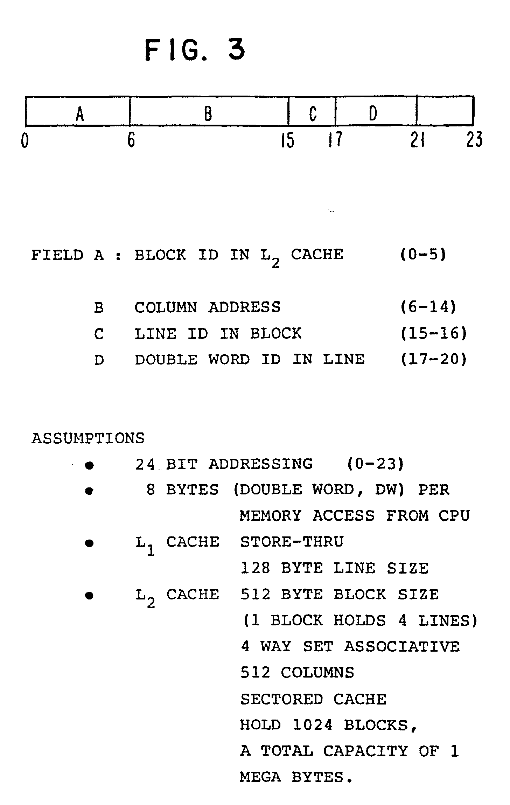

FIG. 3 shows how the fields in a 24-bit address of a memory access are used to address different components in the L2 cache. Under the assumptions taken for the structures of the L1 and L2, Field A (bits 0-5) is the ID of current accessed block and is used to compare the block IDs in the cache directory and, if the block is not resident, is to be stored in the directory. Field B (bits 6-14) is the column address of the L2 cache. Field C (bits 15-16) is the line number of the accessed line in the block. Field D (bits 17-20) is the current DW access in the line.

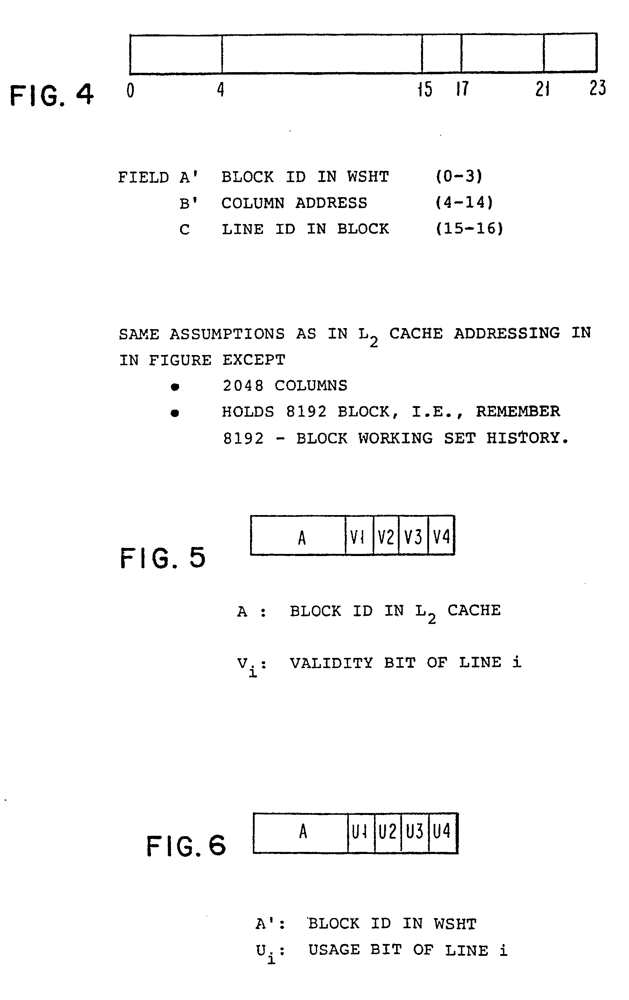

FIG. 4 shows how the same 24-bit address is broken down into fields, though of different individual sizes, for use by the WSHT. Fields A' (bits 0-3) is the block ID. Field B' (bits 4-14) is the column address. Field C (bits 15-16) is the line number of the accessed line in the block. Field D (bits 17-20) is the current DW access in the line.

Fields A and A' both refer to the currently accessed block in the L2 cache.

FIG. 5 shows a representative entry in the L2 cache directory. The entry contains a block ID (A) corresponding to Field A in FIG. 3, and a validity bit for each line in the block indicating if the line is currently loaded in the L2 cache or not.

FIG. 6 shows a representative entry in the WSHT. The entry contains a block ID (A') corresponding to Field A' in FIG. 4, and a use bit for each line in the block indicating if the line was ever used by the processor during the last residence of the block in L2 cache.

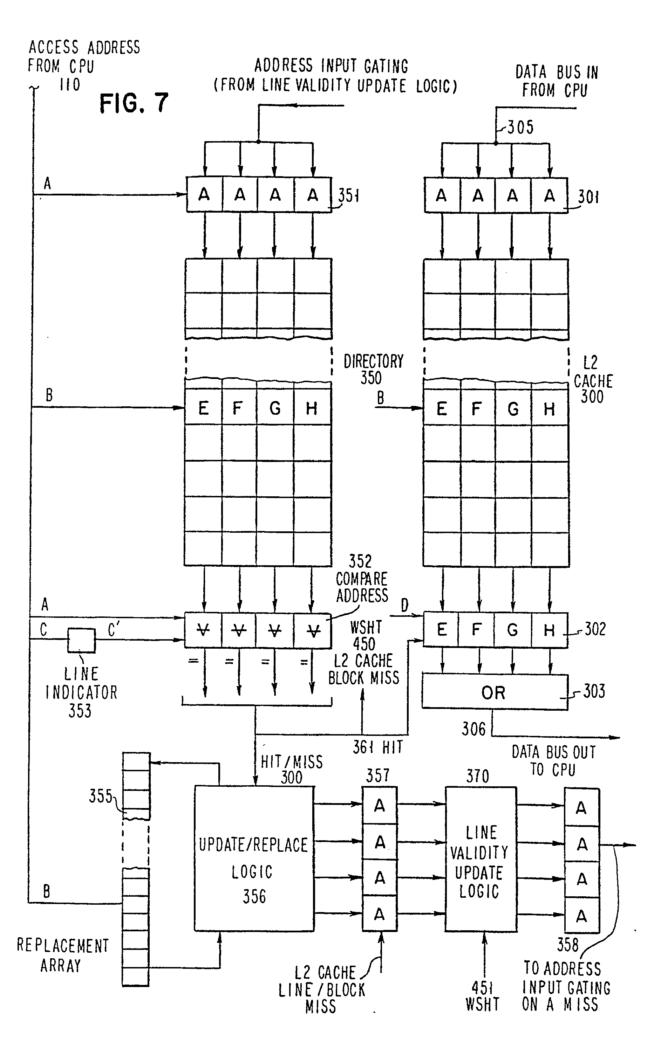

The detailed operation of the L2 cache and the WSHT will now be described, making reference to FIG. 7 which is a detailed block diagram representation of the L2 cache 300, its associated cache directory 350, and the interface 450 with the WSHT 400. A typical 4-way set associative organisation for the directory, update/replace array and control logic. The L2 cache 300 includes a Double-Word (DW) Input Gating Network 301, a DW Output Gating Network 302, an OR gate 303 and a Data Bus In 305. The cache directory 350 includes an Address Input Gating network 351, An Address Compare Network 352 and Line Indicator Logic 353. The Update/Replace Array is comprised of a Replacement Array 355, Update/Replace Logic 356, Address Gating Networks 357 and 358, and Line Validity Update Logic (LVUL) 370.

The address of a memory access on bus 110 from the processor 100 is used to address the directory and the replacement array according to Fields A and B described relative to FIG. 3. Block ID (A) is provided to the address input gating network 351 and the address compare logic 352.

Column address B is provided at 354 to the directory 350 to select which column of block IDs is to be compared. By performing a power of two computation, the line indicator 353 takes the line number C and converts it into the line position C' in a block. For example, for the third line of a block, C = '10' and C' = '0100'. First, the entries E, F, G and H in the column pointed to by B are simultaneously read out to the compare logic 352 to compare with A. The access generates a block hit if one of them compares. Furthermore, it generates a line hit if the validity bit of C' is on. At the same time, the data corresponding to blocks E, F, G and H are read out to the output gating network 302. The result of the comparison at the compare logic is sent, via bus 361, to the cache, if it is a line hit, for a fetch access, the DW in line C of block A will be gated via OR gate 303 to the Data Bus Out 306 and via the data bus 200 to the L1 cache or the processor, and for a data store, the stored DW is sent to the cache, via bus 200 and the Data Bus In 305 to the DW input gating 301. The changed block will be cycled back to the cache 300. If block A is in the cache but the accessed line C is not, i.e., the validity bit of C is off in the directory, a line miss is generated and the request is sent to the main memory. The missed line will be loaded into the cache via the DW input gating network 301. If none of the blocks compare, a block miss is generated and a load request of the accessed line is sent to the main memory. At the same time, a signal is sent, via the interface 450, to WSHT to check if some other lines in the missed block are to be loaded to the cache. A detailed description of the Least-Recently-Used replacement logic 355-358 is set forth in U. S. Patent 4,008,460. The update logic 356 reads the current replacement status 355 of the blocks in the column pointed to by Field B. If block A is missing, the status indicates which one is to be replaced to make space for A. The updated block IDs in the column are stored in the address gating network 357 until the use bits from the WSHT are received at LVUL 370 over line 451. The new entry for block A with its validity bits is stored in the address gating network 358 to be sent to the address input gating network 351 to finally update the cache directory. Whether block A is missing or not, the replacement array is updated so that block A is currently the most-recently-used block in the column.

The major components of the WSHT are similar to those of the L2 cache directory except for the interface logic. The WSHT includes a table 400 of all the IDs of the recently used blocks. An entry in the WSHT is comprised of a block ID and a use bit for each line in the block. For a L2 cache access, the address is also sent to the WSHT via bus 110. All the block IDs in the column pointed to by Field B' at 402 are simultaneously read out to be compared with Field A' at the Address Compare Logic 405. Field C, the line indicator 403 and the line position C' are the same as those shown in FIG. 7. If block A' is in the column and the use bit for line C is on, the entry remains unchanged. If block A' is in the column but the use bit of line C is off, a line miss is generated. If no block ID in the column compares, a block miss is generated and the result is sent to the update/replace logic 420 via bus 407. The Update/Replace logic, once activated, reads the current replacement status of the column pointed to by Field B. If A' causes a WSHT block miss, the replace logic replaces the least-recently-used block ID by A' as specified by the replacement array 410, turns on C in the entry for A' and stores the newly used block A' in the address gating network 421. If the access only causes a line miss, the update logic simply turns on the C' bit in the entry for A'. If current L2 cache access causes a L2 block miss, the interface logic 450 in the L2 cache directory will signal the WSHT to send, via network 451, the use bits for the missed block to the L2 cache directory. Detailed logic of the Line Usage Update 430 will be described later. Block ID (A') together with its line usage are stored in the address input gating 422 and are transferred to the address input gating 406 to update the WSHT 400. Whether there is a WSHT block miss or not, the update logic in 420 will set A' to be the most-recently-used block in the column in the replacement array 410.

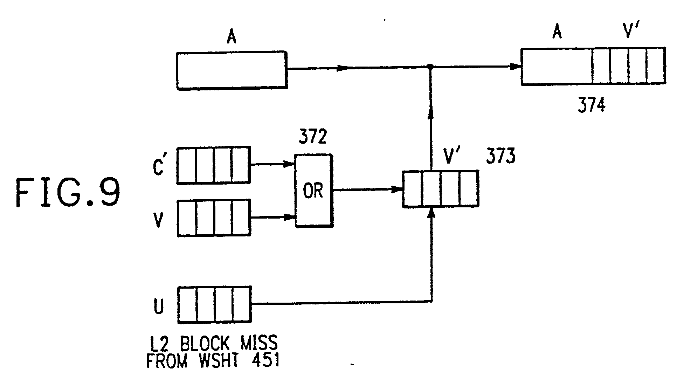

FIG. 9 illustrates in greater detail the Line Validity Update Logic (LVUL) 370, shown generally in FIG. 7, indicating the manner in which the validity bits of a block are updated on a line or block miss. All the addresses are from the address gating network 357 in FIG. 7. On a line miss, the set of validity bits V 371 of block A is merged with C' of missed line through the OR gate 372 and the result is stored in a validity buffer V' 373. On a L2 block miss, the buffer V' is overwritten by the use bits U through 451. In either case, the content of the validity buffer 373 is merged with the block ID A to form a directory entry 374 and is sent to the address gating network 358 in FIG. 7.

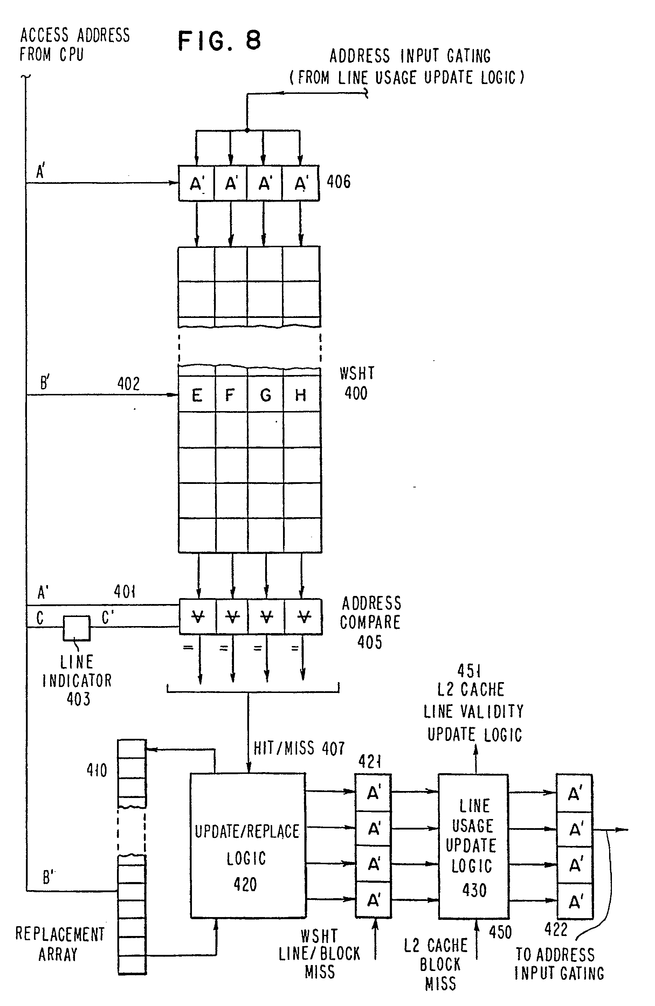

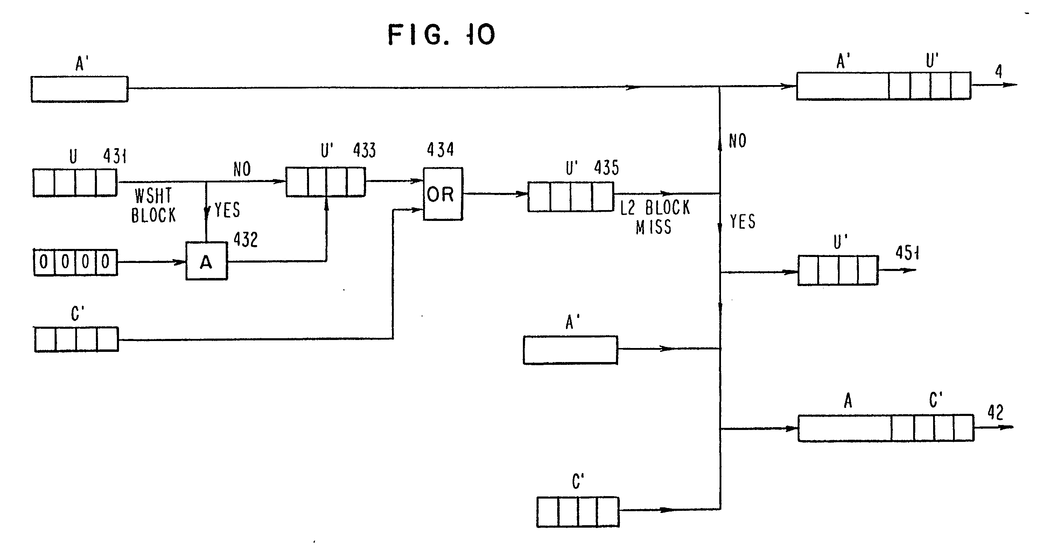

FIG. 10 illustrates in greater detail the Line Usage Update Logic (LVUL) 430, shown generally in FIG. 6, indicating the manner in which the use bits of a block are updated on a WSHT line or block miss. All the addresses are from the address gating network 421 in FIG. 8. If block ID A' is missing from the WSHT, the set of its use bits U 431 is sent to zero through the AND gate 432 and the result is stored in buffer U' 433; otherwise U is sent to U' 433 directly. Thereafter, the use bits U' 433 are merged with C' of the accessed line via the OR gate 434 and the result is stored in another bit buffer U' 435. If no signal is received from the L2 cache indicating that block A is missing, the content of U' is merged with block ID A', and is sent to the address gating network 422 in FIG. 8. If block A is missing in the L2 cache, the set of use bits U' is sent to the LVUL 370 in the L2 cache directory via bus 451. A WSHT entry is constructed, by merging A' and C', and is sent to the address gating 422 in FIG. 8.

In summary, a scheme of fetching lines from the main memory to blocks in a L2 cache, in a memory hierarchy of a data processing system, has been disclosed. The scheme is based on the previous usage of lines in the L2 blocks and is implemented by use of a Working Set History Table (WSHT). Compared to the Sectored Cache approach, the scheme is found, in non-specialised circumstances, to increase substantially the cache hit ratio, and compared with the Full Block Cache approach, also substantially to reduce the traffic between the main memory and the L2 cache in the system. Overall, the arrangement hereof is considered to provide an improved memory access time for a computing system.

There has been described, a computing system including at least one processor operative with a three level memory hierarchy comprised of a L1 cache at a first memory level, a L2 cache at a second memory level and a main memory at a third memory level, with the main memory storing a plurality of sets of information at addressable memory locations, with each set of information being comprised of subsets of information comprised of binary bits with each subset of information including a usage bit, indicative when in a first state the subset of information has been previously used by the computing system and when in a second state the subset of information has not .been previously used by the computing system, with the L2 cache storing sets and subsets of information transferred from the main memory, and the L1 cache storing subsets of information transferred from the L2 cache, the improvement comprising: a history table operative with the main memory and the L2 cache, in which is stored usage information relative to the subset usage of each set of information presently or previously resident in the L2 cache, such that when a given set of information is transferred back to the main memory from the second level set cache, the usage bit for each subset in the set is set to the first or second state in accordance with whether or not the subset was used during its residency in the L2 cache, and when a given subset in a given set of information is requested for transfer to the L2 cache from the main memory, the given subset and any other subsets in the given set of information whose usage bit is in the first state, indicative of previous usage, are transferred to the L2 cache from the main memory.

## Claims

1. A computing system including a processor (100) operative with a three level memory hierarchy comprised of a first level cache (L1; 200), a second level cache (L2; 300) and a main memory (500), with the main memory storing a plurality of sets of information, with each set of information comprised of subsets of information, with the second level cache storing subsets of information, and including usage tables, characterised in that

a usage table is operative with the main memory and the second level cache, in which is stored usage information relative to the subset usage of each set of information presently or previously resident in the second level cache, such that when a given set of information is returned main memory from the second level cache, and a given subset thereof is subsequently requested for transfer back to the second level cache, that subset together with only the subsets of the given set which were utilised, during the given set's last residency or last partial residency in the second level cache, are transferred back to the second level cache from the main memory.

2. A system as claimed in claim 1, wherein the sets and subsets of information are comprised of blocks and lines of information, respectively, and the unit of data requestable by the processor is a double word, a request for a double word, the line containing which is not resident in the first level cache, causes that line to be requested from the second level cache and an entry to be made relative thereto, in the usage table, so that the usage table compiles a history of the line traffic between the two caches but organised in terms of the block organisation of main memory.

3. A system as claimed in either preceding claim in which the line capacity of the usage table is finite but greater than the line capacity of the L2 cache, both caches and the usage table being maintained on a least-recently used, cast-out basis.

4. A method of operating a computer system comprised of at least a processor and a three level memory hierarchy, including a main memory at memory level three in which sets of information are stored at addressable locations, with each set of information being comprised of subsets of information, an L2 cache at memory level two n which a given number of sets of information previously transferred from the main memory are stored, a table operative with the main memory and the second level cache, in which is stored usage information relative to the subset usage of each set of information presently or previously resident in the second level cache, and an L1 cache at memory level one in which a given number of subsets of information previously transferred from the L2 cache are stored, the method characterised by the steps of:

interrogating by the processor, to access a given subset of information, the L1 cache, and if the subset is stored therein, accessing same, and if not;

interrogating by the processor, to access the given subset of information, the L2 cache, and if the subset is stored therein, transferring same to the L1 cache, and if not;

interrogating by the processor, to access the given subset of information, the main memory, with the given subset of information, including any other subsets in the same set of information that had previously utilised in a previous residency in the L2 cache, being transferred to the L2 cache; and

transferring the given subset of information to the L1 cache from the L2 cache for access by the processor.

## Revendications

1. Système de calcul comprenant un processeur (100) fonctionnant avec une hiérarchie de mémoire à trois niveaux comprenant une antémémoire de premier niveau (L1;200), une antémémoire de second niveau (L2;300) et une mémoire principale (500), la mémoire principale mémorisant une pluralité d'ensemble d'informations, chaque ensemble d'informations étant constitué de sous-ensembles d'informations, la mémoire de second niveau mémorisant des sous-ensembles d'informations, et incluant des tables d'utilisation, caractérisé en ce que

une table d'utilisation peut coopérer avec la mémoire principale et l'antémémoire de second niveau, table dans laquelle est mémorisée une information d'utilisation concernant l'utilisation de sous-ensembles de chaque ensemble d'informations résidant actuellement ou antérieurement dans l'antémémoire de second niveau, de sorte que, lorsqu'un ensemble donné d'informations est renvoyé à la mémoire principale à partir de l'antémémoire de second niveau et qu'un sous-ensemble de données de cet ensemble est demandé ultérieurement pour son renvoi à l'antémémoire de second niveau, ce sous-ensemble ainsi que seuls les sous-ensembles de l'ensemble de données, qui ont été utilisés pendant le dernier séjour ou le dernier séjour partiel de l'ensemble dans l'antémémoire de second niveau, sont renvoyés depuis la mémoire principale à l'antémémoire de second niveau.

2. Système selon la revendication 1, dans lequel les ensembles et sous-ensembles d'informations sont formés respectivement de blocs et de lignes d'informations, et l'unité de donnée pouvant être demandée par le processeur est un mot double, une demande d'un mot double, dont la ligne, qui le contient, n'est pas située dans l'antémémoire de premier niveau, déclenche la demande de cette ligne à partir de l'antémémoire de second niveau et l'exécution d'une entrée relative à cette ligne, dans la table d'utilisation, de sorte que la table d'utilisation compile un historique du trafic de la ligne entre les deux antémémoires, mais d'une manière organisée sous la forme de l'organisation en blocs de la mémoire principale.

3. Système selon l'une quelconque des revendications précédentes, dans lequel la capacité en lignes de la table d'utilisation est finie, mais supérieure à la capacité en lignes de l'antémémoire L2, les deux antémémoires et la table d'utilisation étant conservées sur la base d'un algorithme d'ancienneté.

4. Procédé d'exploitation d'un système informatique comprenant au moins un processeur et une hiérarchie de mémoire à trois niveaux incluant une mémoire principale située au niveau de mémoire trois et dans laquelle des ensembles d'informations sont mémorisés en des emplacements adressables, chaque ensemble d'informations étant constitué de sous-ensembles d'informations, une mémoire L2 située au niveau de mémoire deux et dans laquelle sont mémorisés un nombre donné d'ensembles d'informations transférées auparavant à partir de la mémoire principale, une table pouvant coopérer avec la mémoire principale et l'antémémoire de niveau deux et dans laquelle sont mémorisées des informations d'utilisation relatives à l'utilisation de sous-ensembles de chaque ensemble d'informations résidant actuellement ou antérieurement dans l'antémémoire de second niveau, et l'antémémoire L1 située au niveau de mémoire un et dans laquelle sont mémorisés un nombre donné de sous-ensembles d'informations transférés auparavant à partir de l'antémémoire L2, le procédé étant caractérisé par les étapes:

interrogation de l'antémémoire L1 par le processeur pour avoir accès à un sous-ensemble donné d'informations et, si le sous-ensemble est mémorisé dans cette antémémoire, accès à ce sous-ensemble et, si ce n'est pas le cas;

interrogation de l'antémémoire L2 par le processeur, pour avoir accès au sous-ensemble donné d'informations, et si le sous-ensemble est mémorisé dans cette antémémoire, transfert de ce sous-ensemble à l'antémémoire L1, et si ce n'est pas le cas;

interrogation de la mémoire principale par le processeur, pour avoir accès au sous-ensemble donné d'informations, le sous-ensemble donné d'informations et tous les autres sous-ensembles du même ensemble d'informations que celui utilisé précédemment lors d'un séjour précédent dans l'antémémoire L2, étant transférés à cette antémémoire L2; et

transfert du sous-ensemble donné d'informations à l'antémémoire L1 à partir de l'antémémoire L2 pour que le processeur accède à ce sous-ensemble.

## Patentansprüche

1. Rechnersystem mit einem Prozessor (100), der mit einer Drei-Ebenen-Speicherhierarchie betrieben werden kann, die aus einem Cache-Speicher für eine erste Ebene (L1, 200), einem Cache-Speicher für eine zweite Ebene (L2, 300) und einem Hauptspeicher (500) besteht, wobei der Hauptspeicher eine Mehrzahl von Informationssätzen speichert, jeder Informationssatz aus Informationsteilsätzen besteht und der Cache-Speicher für eine zweite Ebene Informationsteilsätze speichert und Benutzungstabellen aufweist, dadurch gekennzeichnet, daß

eine Benutzungstabelle mit dem Hauptspeicher und dem Cache-Speicher für eine zweite Ebene betrieben werden kann, in dem eine Benutzungsinformation bezüglich der Teilsatzbenutzung jedes Informationssatzes gespeichert ist, der sich gegenwärtig oder vorher in dem Cache-Speicher für eine zweite Ebene befindet, sodaß jener Teilsatz zusammen nur mit jenen Teilsätzen des gegebenen Satzes, die verwendet wurden, während des letzten Aufenthaltes oder des letzten Teil-Aufenthaltes in dem Cache-Speicher für eine zweite Ebene von dem Hauptspeicher zurück zu dem Cache-Speicher für eine zweite Ebene übertragen wird, wenn ein gegebener Informationssatz von dem Cache-Speicher für eine zweite Ebene an den Hauptspeicher zurückgeführt wird und ein gegebener Teilsatz davon nachher für eine Zurückübertragung an den Cache-Speicher für eine zweite Ebene angefordert wird.

2. System nach Anspruch 1, bei welchem die Informationssätze und -Teilsätze aus Informationsblöcken bzw. -Zeilen bestehen und die durch den Prozessor anforderbare Dateneinheit ein Doppelwort ist, wobei eine Anforderung für ein Doppelwort deren dieses enthaltende Zeile sich nicht in dem Cache-Speicher für eine erste Ebene befindet, bewirkt, daß jene Zeile von dem Cache-Speicher für eine zweite Ebene angefordert wird und eine Eingabe diesbezüglich in die Benutzungstabelle getätigt wird, sodaß die Benutzungstabelle eine Geschichte des Zeilenverkehrs zwischen den zwei Cache-Speichern, der jedoch mit der Blockorganisation des Hauptspeichers organisiert ist, kompiliert.

3. System nach irgendeinem vorgehenden Anspruch, bei welchem die Zeilenkapazität der Benutzungstabelle endlich jedoch größer ist, als die Zeilenkapazität des L2-Cache-Speichers, wobei beide Cache-Speicher und die Benutzungstabelle auf einer LRU-Austreibbasis gehalten werden.

4. Verfahren zum Betreiben eines Rechnersystems, das zumindest aus einem Prozessor und einer Drei-Ebenen-Speicher-hierarchie besteht, die aufweist: einen Hauptspeicher bei einer Speicherebene drei, in dem Informationssätze an adressierbaren Stellen gespeichert sind, wobei jeder Informationssatz aus Informationsteilsätzen besteht, einen L2-Cache-Speicher bei einer Speicherebene zwei, in dem eine gegebene Anzahl von Informationssätzen gespeichert ist, die vorher von dem Hauptspeicher übertragen wurden, eine Tabelle, die mit dem Hauptspeicher und dem Cache-Speicher für eine zweite Ebene betrieben werden kann, in dem eine Benutzungsinformation bezüglich der Teilsatzbenutzung jedes Informationssatzes gespeichert ist, der sich gegenwärtig oder vorher in dem Cache-Speicher für eine zweite Ebene befindet und einen L1-Cache-Speicher bei einer Speicherebene eins, in dem eine gegebene Anzahl von Informationsteilsätzen gespeichert ist, die vorher von dem L2-Cache-Speicher übertragen wurden, wobei das Verfahren durch die folgenden Schritte gekennzeichnet ist:

Auffordern des L1-Cache-Speichers durch den Prozessor, auf einen gegebenen Informationsteilsatz zuzugreifen und, falls der Teilsatz darin gespeichert ist, so Zugreifen auf denselben und, falls nicht,

Auffordern des L2-Cache-Speichers durch den Prozessor, auf einen gegebenen Informationsteilsatz zuzugreifen und, falls der Teilsatz darin gespeichert ist, so Übertragen desselben an den L1-Cache-Speicher und, falls nicht

Auffordern des Hauptspeichers durch den Prozessor, auf einen gegebenen Informationsteilsatz zuzugreifen, wobei der gegebene Informationsteilsatz einschließlich irgendwelcher anderen Teilsätze in demselben Informationssatz, der vorher in einem vorherigen Aufenthalt in dem L2-Cache-Speicher verwendet wurde, an den L2-Cache-Speicher übertragen wird und

Übertragen des gegebenen Informationsteilsatzes von dem L2-Cache-Speicher an den L1-Cache-Speicher für einen Zugriff durch den Prozessor.

# FIG. 1

MEMORY 500

| DIRECTORY 350 | L2 CACHE 300 |

| DIRECTORY 250 | L1 CACHE 200 |

PROCESSOR (CPU) 100

ADDRESS BUS 110

DATA BUS 120

# FIG. 2

MEMORY 500

WSHT 400

450

| DIRECTORY 350 | L2 CACHE 300 |

| DIRECTORY 250 | L1 CACHE 200 |

PROCESSOR (CPU) 100

ADDRESS BUS 110

DATA BUS 120

# FIG. 3

| A | B | C | D | |
|---|---|---|---|---|

0                   6                   15  17         21   23

FIELD A : BLOCK ID IN $L_2$ CACHE    (0-5)

      B   COLUMN ADDRESS        (6-14)

      C   LINE ID IN BLOCK      (15-16)

      D   DOUBLE WORD ID IN LINE  (17-20)

ASSUMPTIONS

    ● 24 BIT ADDRESSING  (0-23)

    ●  8 BYTES (DOUBLE WORD, DW) PER
                MEMORY ACCESS FROM CPU

    ● $L_1$ CACHE  STORE-THRU
                128 BYTE LINE SIZE

    ● $L_2$ CACHE  512 BYTE BLOCK SIZE
                (1 BLOCK HOLDS 4 LINES)
                4 WAY SET ASSOCIATIVE
                512 COLUMNS
                SECTORED CACHE
                HOLD 1024 BLOCKS,
                A TOTAL CAPACITY OF 1
                MEGA BYTES.

**FIG. 4**

| | | | | |
|---|---|---|---|---|
| 0 | 4 | 15 | 17 | 21  23 |

FIELD A'   BLOCK ID IN WSHT      (0-3)

     B'   COLUMN ADDRESS      (4-14)

     C   LINE ID IN BLOCK      (15-16)

SAME ASSUMPTIONS AS IN $L_2$ CACHE ADDRESSING IN
IN FIGURE EXCEPT

- 2048 COLUMNS
- HOLDS 8192 BLOCK, I.E., REMEMBER
  8192 - BLOCK WORKING SET HISTORY.

**FIG. 5**

| A | V1 | V2 | V3 | V4 |
|---|---|---|---|---|

A :   BLOCK ID IN $L_2$ CACHE

$V_i$:   VALIDITY BIT OF LINE i

**FIG. 6**

| A | U1 | U2 | U3 | U4 |
|---|---|---|---|---|

A':   BLOCK ID IN WSHT

$U_i$:   USAGE BIT OF LINE i

FIG. 7

# FIG. 8

ACCESS ADDRESS
FROM CPU

ADDRESS INPUT GATING
(FROM LINE USAGE UPDATE LOGIC)

A'

A' | A' | A' | A'  406

WSHT
400

B'  402

E | F | G | H

A'  401

C  C'

LINE
INDICATOR
403

∀ | ∀ | ∀ | ∀

ADDRESS
COMPARE
405

= = = =

HIT/MISS 407

421

451
L2 CACHE
LINE VALIDITY
UPDATE LOGIC

410

B'

REPLACEMENT
ARRAY

UPDATE/REPLACE
LOGIC
420

A'
A'
A'
A'

LINE
USAGE
UPDATE
LOGIC
430

A'
A'
A'
A'

WSHT
LINE/BLOCK
MISS

L2 CACHE
BLOCK
MISS

450

422

TO ADDRESS
INPUT GATING

14

FIG.9

A

374

A    V′

372

C′

OR

V′    373

V

U

L2 BLOCK MISS
FROM WSHT 451

FIG. 10

EP 0 173 893 B1